# EUROPÄISCHE PATENTANMELDUNG

(11) **EP 3 960 664 A1**
(43) Veröffentlichungstag der Anmeldung: **02.03.2022**
(21) Anmeldenummer: 20193745.5
(22) Anmeldetag: 31.08.2020
(51) Int. Cl.: B65G 17/12, B65G 17/36

(54) **BECHER FÜR EIN BECHERWERK**

(71) Anmelder: BEUMER Group GmbH & Co. KG, 59269 Beckum (DE)
(72) Erfinder: von Schwartz, Adam, 44797 Bochum (DE); Cornelius, Peter, 59510 Lippetal (DE)
(74) Vertreter: Angerhausen, Christoph

(57) **Zusammenfassung**

Becher für ein Becherwerk, welcher eine eine Einfüll- und Auswurföffnung umgebende Becherwandung aufweist, welche eine Rückwand und eine vordere Becherwand umfasst, wobei die vordere Becherwand eine die Einfüll- und Auswurföffnung begrenzende Vorderkante aufweist, und wobei der Becher über die Rückwand an eine Fördervorrichtung anbindbar ist, wobei das Verhältnis zwischen der Bechertiefe, welche der horizontalen Distanz zwischen Rückwand und Vorderkante entspricht, und der Becherhöhe, welche der senkrechten Distanz zwischen einem Bechertiefstpunkt und der Vorderkante entspricht, größer als 1, vorzugsweise größer als 1,3, besonders bevorzugt größer als 1,5 ist.

## Beschreibung

Die Erfindung geht aus von einem Becher für ein Becherwerk, welcher eine eine Einfüll- und Auswurföffnung umgebende Becherwandung aufweist, welche eine Rückwand und eine vordere Becherwand umfasst, wobei die vordere Becherwand eine die Einfüll- und Auswurföffnung begrenzende Vorderkante aufweist, und wobei der Becher über die Rückwand an eine Fördervorrichtung anbindbar ist. Die Erfindung betrifft ferner ein entsprechendes Becherwerk.

Aus der EP 2 870 084 B1 ist ein Gurtbecherwerk mit einem angetriebenen Gurt und mit einer Mehrzahl von Bechern zur Förderung von Schüttgut bekannt. Die Becher weisen an ihrem Boden eine geringere Breite als am oberen Ende ihrer dadurch seitlich auswärts ausgestellten Seitenwände auf. An dem unteren Ende ihrer dem Gurt zugewandten Rückwand weisen die Becher ferner einen über den Boden des Bechers in Richtung des in Förderrichtung nachfolgenden Bechers vorspringenden Überstand auf, der bei senkrecht übereinander stehenden Bechern zwischen die dem oberen Rand der Rückwand überragenden Seitenwände des in Förderrichtung nachfolgenden Bechers greift und sich dichtend bis an den oberen Rand der Rückwand des nachfolgenden Bechers heran erstreckt.

Aus der Druckschrift CN 209554123 U ist ein Becherförderer bekannt, welcher eine Mehrzahl Becher aufweist, wobei der Becher eine Seitenplatte umfasst, welche fest mit dem Becherkörper verbunden ist, sowie einen bogenförmigen Boden. Die Außenseite des Bechers ist mit eine Schutzabdeckung versehen, welche mit der Seitenplatte durch einen Bügel verbunden ist.

Die aus dem Stand der Technik bekannten Becher haben den Nachteil, dass diese beim Auswerfen des Schüttguts aus dem Becher einerseits eine hohe Quote an Materialrückfall verursachen und andererseits einen hohen Grad an Staubentwicklung bewirken.

Es ist daher die Aufgabe der Erfindung, einen Becher bereitzustellen, welcher ein verbessertes Auswurfverhalten aufweist.

Die Aufgabe wird gelöst durch einen Becher und ein Becherwerk mit den Merkmalen der unabhängigen Ansprüche.

Demgemäß wird vorgeschlagen, dass das Verhältnis zwischen der Bechertiefe, welche der horizontalen Distanz zwischen Rückwand und Vorderkante entspricht, und der Becherhöhe, welche der senkrechten Distanz zwischen einem Bechertiefstpunkt und der Vorderkante entspricht, größer als 1, vorzugsweise größer als 1,3, besonders bevorzugt größer als 1,5 ist.

Durch die dadurch erreichte besonders flache Becherform weist der Becher ein besonders vorteilhaftes Auswurfverhalten auf, indem nur geringe Zentrifugalkraft notwendig ist, um das im Becher aufgenommene Material effektiv auszuwerfen. Damit kann bereits bei niedrigen Fördergeschwindigkeiten ein gutes Auswurfverhalten erzielt werden. Gleichzeitig ist die Becherhöhe ausreichend, um ein frühzeitiges Auswerfen von Schüttgut aus dem Becher, insbesondere noch während des Umlenkvorgangs, zu verhindern. Die Einfüll- und Auswurföffnung kann insbesondere durch eine die Becherwandung umlaufende und abschließende Kante begrenzt sein. Die Becherwandung kann insbesondere durch Metallwände gebildet sein. Die Becherwandung kann zumindest eine Rückwand und eine vordere Becherwand umfassen, wobei die Becherwandung stets einen Becherkörper umschließt. Dabei kann vorgesehen sein, dass die Einfüll- und Auswurföffnung der einzige Becherzugang ist. Die Vorderkante des Bechers kann einen Teil der die Becherwandung umlaufenden und abschließenden Kante sein. Die Vorderkante kann eben mit der Kante ausgeführt sein oder gegenüber dieser stufenförmig abgesetzt sein. Die Vorderkante kann gegenüber dem Becherkörper eine Materialverstärkung, beispielsweise durch eine größere Dicke oder gehärtetes Material, aufweisen. Der Bechertiefstpunkt wird insbesondere bestimmt durch den untersten Punkt des Bechers in vertikaler Richtung. Dieser kann bestimmt werden durch eine bis zur Rückwand heruntergezogene vordere Becherwand oder durch einen dazwischen angeordneten Boden.

Es kann vorgesehen sein, dass in der Rückwand eine Anbindungseinrichtung zur Anbindung an eine Fördervorrichtung vorgesehen ist, wobei das Verhältnis aus der Anbindungshöhe, welche der senkrechten Distanz zwischen dem Bechertiefstpunkt und dem senkrechten Mittelpunkt der Anbindungseinrichtung entspricht, und der Becherhöhe kleiner als 0,6, bevorzugt kleiner als 0,5, besonders bevorzugt kleiner als 0,4 ist.

Mittels der Anbindungseinrichtung kann der Becher an der Fördervorrichtung fixiert werden. Die Anbindungseinrichtung kann zumindest einen Abstützabschnitt umfassen, über welchen der Becher gegenüber der Fördervorrichtung abgestützt ist. Der Abstützabschnitt kann gegenüber der Rückwand erhaben sein. Insbesondere kann die Anbindungseinrichtung in ihrem vertikalen Verlauf dreigeteilt sein, mit einer Befestigungseinrichtung zur Fixierung des Bechers an der Fördervorrichtung sowie mit zwei Abstützabschnitten, welche darüber und darunter angeordnet sind. Durch die dreigeteilte Anbindungseinrichtung ist der Becher um die Erhebungen der Abstützabschnitte von der Fördervorrichtung beabstandet und der Anbindungspunkt des Bechers an die Fördervorrichtung im durch die Abstützabschnitte gebildeten Zwischenraum aufgenommen. Durch die Abstützabschnitte kann vermieden werden, dass insbesondere bei den Umlenkvorgängen des Bechers Material zwischen Fördervorrichtung und Becherrückseite eindringt und dazwischen eingeklemmt wird. Dadurch kann in vorteilhafter Weise der Verschleiß von Becher und insbesondere dem Gurt der Fördervorrichtung minimiert werden. Durch das vorgeschlagene Verhältnis zwischen Anbindungshöhe und der Becherhöhe, welches den Ort der Befestigungseinrichtung in vertikaler Richtung gemessen an der Gesamtbecherhöhe widerspiegelt beziehungsweise den prozentualen Anteilen der Becherhöhenabschnitte oberhalb und unterhalb der Befestigungseinrichtung, erfolgt eine möglichst tiefliegende Anbindung des Bechers an die Fördervorrichtung. Ergänzend zur vorgeschlagenen flachen Becherausführung bewirkt die niedrige Anbindungshöhe ebenfalls ein deutlich verbessertes Auswurfverhalten.

Es kann ferner vorgesehen sein, dass der mittlere Neigungswinkel der vorderen Becherwand kleiner als 50°, bevorzugt kleiner als 45°, besonders bevorzugt kleiner als 41° ist.

Durch das Vorsehen eines flachen Neigungswinkels kann in Ergänzung zur flachen Becherhöhe sowie zur niedrigen Anbindungshöhe das Auswurfverhalten ebenfalls deutlich verbessert werden. Insbesondere kann vorgesehen sein, dass der Neigungswinkel des an die Vorderkante angrenzenden Abschnitts der vorderen Becherwand dem vorgeschlagenen Neigungswinkel entspricht. Es kann außerdem vorgesehen sein, dass die vordere Becherwand zumindest abschnittsweise den vorgeschlagenen Neigungswinkel aufweist. Insbesondere kann vorgesehen sein, dass die gesamte vordere Becherwand den vorgeschlagenen Neigungswinkel aufweist.

Es ist denkbar, dass der Becher ferner einen zumindest abschnittsweise flachen Boden aufweist, wobei sich der Bechertiefstpunkt im Boden befindet.

Durch das Vorsehen eines Bodens kann in vorteilhafter Weise gewährleistet werden, dass der Becher eine flache Bauform aufweist und gleichzeitig ein großes Füllvolumen bereitstellt. Der Boden kann zwischen der vorderen Becherwand und der Rückwand angeordnet sein und diese verbinden. Es kann vorgesehen sein, dass der gesamte Boden flach ausgeführt ist. Alternativ kann vorgesehen sein, dass der Boden einen gegenüber der vorderen Becherwand flacheren Winkel aufweist. Dabei kann der an die vordere Becherwand angrenzende Bodenabschnitt zum an die Rückwand angrenzenden Bodenabschnitt hin abfallen.

Ferner kann vorgesehen sein, dass der Boden an die vordere Becherwand angrenzt, wobei der Becher im Übergang zwischen der vorderen Becherwand und dem Boden eine Unterkante aufweisen kann. Es kann vorgesehen sein, dass die vordere Becherwand ausgehend von der Unterkante bis hin zur Vorderkante den vorgeschlagenen Neigungswinkel aufweist. Weiterhin kann vorgesehen sein, dass sich ausgehend von der Unterkante der Becherboden waagerecht bis hin zur Rückwand erstreckt. Die Unterkante kann senkrecht unterhalb der Einfüll- und Auswurföffnung angeordnet sein.

Ferner kann vorgesehene sein, dass die Rückwand zumindest abschnittsweise senkrecht verläuft, wobei die Anbindungseinrichtung im zumindest abschnittsweise senkrecht verlaufenden Rückwandabschnitt angeordnet ist. Insbesondere kann der senkrechte Rückwandabschnitt an den Boden angrenzen. Der senkrechte Rückwandabschnitt kann zumindest die Höhe der Anbindungseinrichtung aufweisen, umfassend die zwei Abstützabschnitte sowie die dazwischen angeordnete Befestigungseinrichtung.

Es kann zum Beispiel vorgesehen sein, dass die Anbindungseinrichtung zumindest eine Reihe horizontal beabstandeter Bohrungen umfasst. Die Bohrungen können sich zwischen den Seitenelementen des Bechers erstrecken. Die Bohrungen können regelmäßig beabstandet sein. Die Anbindung an die Fördervorrichtung kann über insbesondere von dieser ausgehenden Gewindestangen erfolgen, wobei becherinnenseitig entsprechende Befestigungsmuttern vorgesehen sein können. Es kann alternativ vorgesehen, dass die Anbindungseinrichtung eine Schweißverbindung zur Verbindung des Bechers mit der Fördervorrichtung umfasst.

Ferner kann der Becher die vordere Becherwand und die Rückwand verbindende Seitenwände umfassen, wobei die Seitenwände jeweils eine die Einfüll- und Auswurföffnung begrenzende Seitenwandoberkante aufweisen. Die Seitenwandoberkanten können jeweils integrale Abschnitte der die Becherwandung umlaufenden und abschließenden Kante sein. Im Übergang zur vorderen Becherwand können die Seitenwände jeweils einen in die vordere Becherwand übergehenden Radius aufweisen. Die Seitenwände können flach sein. Die Seitenwände können alternativ in einer oder zwei Achsen konkav geformt sein.

Außerdem kann die Rückwand ferner einen gegenüber dem zumindest abschnittsweise senkrecht verlaufenden Rückwandabschnitt geneigten Abschnitt aufweisen, welcher an seinem oberen Ende eine die Einfüll- und Auswurföffnung begrenzende Oberkante aufweist. Damit kann sich der geneigte Abschnitt insbesondere oberhalb des senkrecht verlaufenden Rückwandabschnitts an diesen anschließen. Der geneigte Abschnitt kann dazu dienen, entlang dieses Abschnitts aus dem Becher austretendes Material in eine Richtung weg von der Fördervorrichtung zu lenken. Dadurch kann das Auswurfverhalten des Bechers weiter verbessert werden. Zum einen kann dadurch der Rückfall von Material vermindert werden. Zum andern kann zwischen den geneigten Abschnitt und die Fördervorrichtung gefallenes Material durch die Neigung leichter entweichen.

Es kann dabei vorgesehen sein, dass der Neigungswinkel des geneigten Abschnitts gegenüber dem zumindest abschnittsweise senkrecht verlaufenden Rückwandabschnitt größer als 15°, bevorzugt größer als 18°, besonders bevorzugt größer als 20° ist. Es kann weiterhin vorgesehen sein, dass der Neigungswinkel des geneigten Abschnitts dem Neigungswinkel der vorderen Becherwand entspricht, so dass diese parallel zueinander angeordnet sind.

Ferner ist denkbar, dass zumindest eine der Seitenwandoberkanten zumindest abschnittsweise einen Neigungswinkel zwischen 7° bis 11°, bevorzugt zwischen 8° und 10°, besonders bevorzugt von 9° aufweist. Insbesondere können beide Seitenwandoberkanten den vorgeschlagenen Neigungswinkel aufweisen. Die Neigung der Seitenwandoberkante kann insbesondere zur Becherrückwand hin ansteigen, so dass der niedrigste Punkt an der Vorderkante des Bechers liegt. Entsprechend kann der höchste Punkt des Bechers an der Oberseite des geneigten Rückwandabschnitts liegen. Durch die geneigte Seitenwandoberkante wird zum einen das Füllvolumen des Bechers erhöht. Zum anderen wird beim Auswerfen ein Entweichen des Materials an der Bechervorderseite begünstigt beziehungsweise an der Becherrückseite verhindert.

Es wird weiterhin ein Becherwerk vorgeschlagen, bei welchem ein Becher über eine Anbindungseinrichtung an einer Fördervorrichtung des Becherwerks fixiert ist, wobei die Einfüll- und Auswurföffnung in die Bewegungsrichtung der Fördervorrichtung ausgerichtet ist. Das Becherwerk kann insbesondere eine umlaufende, endlose Fördervorrichtung aufweisen. Das Becherwerk kann eine Mehrzahl Becher mit jeweils in Bewegungsrichtung der Fördervorrichtung ausgerichteten Einfüll- und Auswurföffnungen aufweisen.

Das Becherwerk kann eine Fördervorrichtung aufweisen, welche einen Gurt oder eine Kette aufweist.

Insbesondere kann vorgesehen sein, dass die Fördervorrichtung eine Steigung aufweist und insbesondere senkrecht ausgerichtet ist, wobei das Becherwerk ferner zwei Umlenkeinrichtungen aufweist, um welche die Fördervorrichtung umgelenkt ist. Das Becherwerk kann eine Einfüllstelle an einem unteren Ende der Fördervorrichtung sowie eine Auswurfstelle an einem oberen Ende der Fördervorrichtung aufweisen. Alternativ kann das Becherwerk mehrere Einfüllstellen aufweisen. Die Einfüllstelle kann auf der Seite der Fördervorrichtung mit nach oben ausgerichteten Einfüll- und Auswurföffnungen angeordnet sein. Die Auswurfstelle kann auf der Seite der Fördervorrichtung mit nach unten ausgerichteten Einfüll- und Auswurföffnungen angeordnet sein.

Dabei kann die Fördergeschwindigkeit der Fördervorrichtung so gewählt sein, dass beim Auswurfvorgang die Resultierende aus Gewichtskraft und Zentrifugalkraft im Wesentlichen dem mittleren Neigungswinkel der vorderen Becherwand entspricht. Die Resultierende kann dabei im zu erwartenden Massenmittelpunkt des Materials eines durchschnittlich gefüllten Bechers verortet sein. Die Fördergeschwindigkeit kann der Gurtgeschwindigkeit entsprechen.

Weitere Eigenschaften, Vorteile und Merkmale der Erfindung sind in der folgenden Beschreibung bevorzugter Ausführungen der Erfindung anhand der beiliegenden Zeichnungen erkennbar, in denen zeigen:
- Fig. 1: eine Seitenansicht einer Ausführungsform eines erfindungsgemäßen Bechers;
- Fig. 2: eine schematische Darstellung der beim Auswerfen auf den Becherinhalt wirkenden Kräfte.

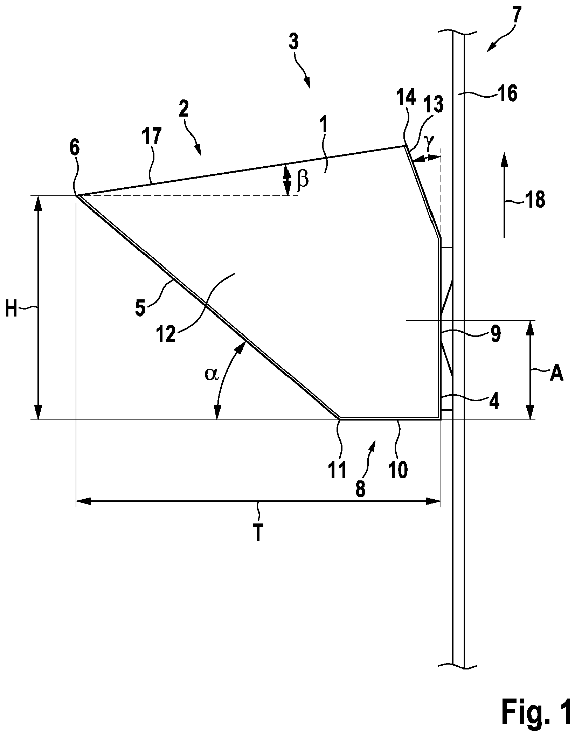

In Figur 1 ist ein Becher 1 gemäß der Erfindung dargestellt, welcher eine Becherwandung 3 mit einer vorderen Becherwand 5, einer Rückwand 4, die vordere Becherwand 5 und die Rückwand 4 verbindende Seitenwände 12 sowie einen Boden 10 aufweist. Der Becher 1 ist über eine Anbindungseinrichtung 9 an einen Gurt 16 einer Fördervorrichtung angebunden, welche eine senkrecht nach oben gerichtete Bewegungsrichtung 18 aufweist. Der Becher 1 weist an seiner Oberseite eine Einfüll- und Auswurföffnung 2 auf, welche durch eine die Becherwandung 3 nach oben hin abschließende Kante gebildet ist. Die Kante weist mehrere Abschnitte auf. Dabei ist die Vorderkante 6 der vorderen Becherwand 5 zugeordnet und bildet den vordersten Punkt des Bechers 1, welcher damit am weitesten von der Fördervorrichtung 7 entfernt ist. Seitenwände 12 weisen jeweils Seitenwandoberkanten 17 auf, welche die Einfüll- und Auswurföffnung 2 seitlich begrenzen. Die Rückwand 4 weist eine Oberkante 14 auf, welche die Einfüll- und Auswurföffnung 2 rückseitig begrenzt. Die Oberkante 14 bildet in der dargestellten Ausführungsform den am höchsten gelegenen Punkt des Bechers 1. Die Anbindungseinrichtung 9 weist in senkrechter Richtung drei Abschnitte auf, welche an einem senkrecht verlaufenden Abschnitt der Rückwand 4 angeordnet sind. Mittig ist eine Befestigungseinrichtung zum Befestigen des Bechers 1 am Gurt 16 der Fördervorrichtung 7 vorgesehen. Oberhalb und unterhalb von der Befestigungseinrichtung sind erhabene Abstützabschnitte vorgesehen, welche den Becher 1 beziehungsweise die Rückwand 4 um einen Abstand vom Gurt 16 beabstanden. Die Rückwand 4 weist oberhalb des senkrechten Rückwandabschnitts einen geneigten Abschnitt 13 auf, welcher sich um einen Winkel γ gegenüber der senkrechten in Richtung der Bechervorderseite neigt und an seiner Oberseite durch die Oberkante 14 begrenzt wird. Die daran angrenzenden Seitenwandoberkanten 17 fallen zur Vorderkante 6 um einen Winkel β gegenüber der Horizontalen geneigt ab. An die Rückwand 4 angrenzend sowie an die vordere Becherwand 5 angrenzend ist dazwischen der waagerechte Boden 10 angeordnet. Eine Unterkante 11 ist im Übergang zwischen Boden 10 und vorderer Becherwand 5 angeordnet. Im dargestellten Ausführungsbeispiel ist der Boden waagerecht ausgeführt und bildet als am tiefsten positioniertes Element den Bechertiefstpunkt 8. Zwischen Unterkante 11 und Vorderkante 6 steigt die vordere Becherwand 5 mit einem Winkel α gegenüber der Horizontalen an.

Die senkrechte Distanz zwischen der Vorderkante 6 und dem Bechertiefstpunkt 8, also im dargestellten Beispiel dem Boden 10, stellt die Becherhöhe H dar. Die Bechertiefe T entspricht der horizontalen Distanz zwischen der Vorderkante 6 und dem senkrechten Abschnitt der Rückwand 4. Die Anbindungshöhe A entspricht der vertikalen Distanz zwischen dem Bechertiefstpunkt 8 und dem mittleren Punkt der Anbindungseinrichtung 9 in senkrechter Abmessung, in welchem im dargestellten Beispiel die Befestigungseinrichtung angeordnet ist.

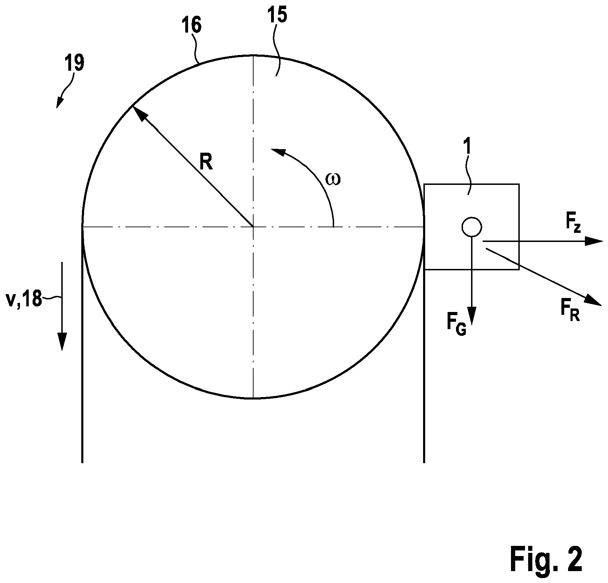

Figur 2 zeigt beispielhaft ein Becherwerk mit einem Becher 1, welcher sich in der Bewegungsrichtung 18 kurz vor einer Umlenkeinrichtung befindet, hinter welcher eine Auswurfstelle angeordnet ist. Auf den Becherinhalt wirken die Gewichtskraft F_{G} sowie während des Umlenkens die Zentrifugalkraft Fz. Der Gurt 16 der Fördervorrichtung 7 bewegt sich mit einer Fördergeschwindigkeit v und die Umlenkrolle aufweisend einen Radius R entsprechend mit einer Winkelgeschwindigkeit ω. Die Fördergeschwindigkeit v des Gurts 16 ist nun genau so eingestellt, dass an der Auswurfstelle 19 die Resultierende F_{R} der Kräfte Fz und F_{G} dem Neigungswinkel α der vorderen Becherwand 5 entspricht, so dass der Auswurf ohne Rückfall und Staubentwicklung vonstatten geht.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Becher
- 2: Einfüll- und Auswurföffnung
- 3: Becherwandung
- 4: Rückwand
- 5: Vordere Becherwand
- 6: Vorderkante
- 7: Fördervorrichtung
- 8: Bechertiefstpunkt
- 9: Anbindungseinrichtung
- 10: Boden
- 11: Unterkante
- 12: Seitenwände
- 13: Geneigter Abschnitt
- 14: Oberkante
- 15: Umlenkeinrichtung
- 16: Gurt
- 17: Seitenwandoberkante
- 18: Bewegungsrichtung
- 19: Auswurfstelle
- Fz: Zentrifugalkraft
- F_{G}: Gewichtskraft
- F_{R}: Resultierende
- A: Anbindungshöhe
- H: Becherhöhe
- T: Bechertiefe
- R: Radius Umlenkeinrichtung
- v: Fördergeschwindigkeit
- α: Neigungswinkel
- β: Neigungswinkel
- γ: Neigungswinkel
- ω: Winkelgeschwindigkeit

## Patentansprüche

1. Becher (1) für ein Becherwerk,
welcher eine eine Einfüll- und Auswurföffnung (2) umgebende Becherwandung (3) aufweist, welche eine Rückwand (4) und eine vordere Becherwand (5) umfasst, wobei die vordere Becherwand (5) eine die Einfüll- und Auswurföffnung (2) begrenzende Vorderkante (6) aufweist, und wobei der Becher (1) über die Rückwand (4) an eine Fördervorrichtung (7) anbindbar ist, **dadurch gekennzeichnet, dass** das Verhältnis zwischen der Bechertiefe (T), welche der horizontalen Distanz zwischen Rückwand (4) und Vorderkante (6) entspricht, und der Becherhöhe (H), welche der senkrechten Distanz zwischen einem Bechertiefstpunkt (8) und der Vorderkante (6) entspricht, größer als 1, vorzugsweise größer als 1,3, besonders bevorzugt größer als 1,5 ist.

2. Becher (1) nach Anspruch 1, wobei in der Rückwand (4) eine Anbindungseinrichtung (9) zur Anbindung an eine Fördervorrichtung (7) vorgesehen ist, wobei das Verhältnis aus der Anbindungshöhe (A), welche der senkrechten Distanz zwischen dem Bechertiefstpunkt (8) und dem senkrechten Mittelpunkt der Anbindungseinrichtung (9) entspricht, und der Becherhöhe (H) kleiner als 0,6, bevorzugt kleiner als 0,5, besonders bevorzugt kleiner als 0,4 ist.

3. Becher (1) nach Anspruch 1 oder 2, wobei der mittlere Neigungswinkel (a) der vorderen Becherwand (5) kleiner als 50°, bevorzugt kleiner als 45°, besonders bevorzugt kleiner als 41° ist.

4. Becher (1) nach einem der vorangehenden Ansprüche, wobei der Becher (1) ferner einen zumindest abschnittsweise flachen Boden (10) aufweist, wobei sich der Bechertiefstpunkt (8) im Boden (10) befindet.

5. Becher (1) nach Anspruch 4, wobei der Boden (10) an die vordere Becherwand (5) angrenzt, wobei der Becher (1) im Übergang zwischen der vorderen Becherwand (5) und dem Boden (10) eine Unterkante (11) aufweist.

6. Becher (1) nach einem der vorangehenden Ansprüche, wobei die Rückwand (4) zumindest abschnittsweise senkrecht verläuft, wobei die Anbindungseinrichtung (9) im zumindest abschnittsweise senkrecht verlaufenden Rückwandabschnitt angeordnet ist.

7. Becher (1) nach Anspruch 6, wobei die Anbindungseinrichtung (9) zumindest eine Reihe horizontal beabstandeter Bohrungen umfasst.

8. Becher (1) nach einem der vorangehenden Ansprüche, welcher ferner die vordere Becherwand (5) und die Rückwand (4) verbindende Seitenwände (12) umfasst, wobei die Seitenwände jeweils eine die Einfüll- und Auswurföffnung (2) begrenzende Seitenwandoberkante (17) aufweisen.

9. Becher nach Anspruch (9), wobei die Rückwand ferner einen gegenüber dem zumindest abschnittsweise senkrecht verlaufenden Rückwandabschnitt geneigten Abschnitt (13) aufweist, welcher an seinem oberen Ende eine die Einfüll- und Auswurföffnung (2) begrenzende Oberkante (14) aufweist.

10. Becher (1) nach Anspruch 9, wobei der Neigungswinkel (β) des geneigten Abschnitts (13) gegenüber dem zumindest abschnittsweise senkrecht verlaufenden Rückwandabschnitt größer als 15°, bevorzugt größer als 18°, besonders bevorzugt größer als 20° ist.

11. Becher (1) nach einem der Ansprüche 8 bis 10, wobei zumindest eine der Seitenwandoberkanten (17) zumindest abschnittsweise einen Neigungswinkel (γ) zwischen 7° bis 11°, bevorzugt zwischen 8° und 10°, besonders bevorzugt von 9° aufweist.

12. Becherwerk mit zumindest einem Becher nach einem der Ansprüche, welcher über eine Anbindungseinrichtung (9) an einer Fördervorrichtung (7) des Becherwerks fixiert ist, wobei die Einfüll- und Auswurföffnung (2) in die Bewegungsrichtung (18) der Fördervorrichtung (7) ausgerichtet ist.

13. Becherwerk nach Anspruch 12, wobei die Fördervorrichtung (7) einen Gurt (16) oder eine Kette aufweist.

14. Becherwerk nach Anspruch 12 oder 13, wobei die Fördervorrichtung (7) eine Steigung aufweist und insbesondere senkrecht ausgerichtet ist, wobei das Becherwerk ferner zwei Umlenkeinrichtungen (15) aufweist, um welche die Fördervorrichtung (7) umgelenkt ist.

15. Becherwerk nach Anspruch 14, wobei die Fördergeschwindigkeit (v) der Fördervorrichtung (7) so gewählt ist, dass beim Auswurfvorgang die Resultierende aus Gewichtskraft (F_{G}) und Zentrifugalkraft (Fz) im Wesentlichen dem mittleren Neigungswinkel (a) der vorderen Becherwand (5) entspricht.

## Geänderte Patentansprüche

### Geänderte Patentansprüche gemäss Regel 137(2) EPÜ.

1. Becher (1) für ein Becherwerk,
welcher eine eine Einfüll- und Auswurföffnung (2) umgebende Becherwandung (3) aufweist, welche eine Rückwand (4) und eine vordere Becherwand (5) umfasst, wobei die vordere Becherwand (5) eine die Einfüll- und Auswurföffnung (2) begrenzende Vorderkante (6) aufweist, und wobei in der Rückwand (4) eine Anbindungseinrichtung (9) zur Anbindung an eine Fördervorrichtung (7) vorgesehen ist, wobei das Verhältnis zwischen der Bechertiefe (T), welche der horizontalen Distanz zwischen Rückwand (4) und Vorderkante (6) entspricht, und der Becherhöhe (H), welche der senkrechten Distanz zwischen einem Bechertiefstpunkt (8) und der Vorderkante (6) entspricht, vorzugsweise größer als 1,3, besonders bevorzugt größer als 1,5 ist,
**dadurch gekennzeichnet, dass** das Verhältnis aus der Anbindungshöhe (A), welche der senkrechten Distanz zwischen dem Bechertiefstpunkt (8) und dem senkrechten Mittelpunkt der Anbindungseinrichtung (9) entspricht, und der Becherhöhe (H) bevorzugt kleiner als 0,5, besonders bevorzugt kleiner als 0,4 ist.

2. Becher (1) nach Anspruch 1, wobei der mittlere Neigungswinkel (α) der vorderen Becherwand (5) kleiner als 50°, bevorzugt kleiner als 45°, besonders bevorzugt kleiner als 41° ist.

3. Becher (1) nach einem der vorangehenden Ansprüche, wobei der Becher (1) ferner einen zumindest abschnittsweise flachen Boden (10) aufweist, wobei sich der Bechertiefstpunkt (8) im Boden (10) befindet.

4. Becher (1) nach Anspruch 3, wobei der Boden (10) an die vordere Becherwand (5) angrenzt, wobei der Becher (1) im Übergang zwischen der vorderen Becherwand (5) und dem Boden (10) eine Unterkante (11) aufweist.

5. Becher (1) nach einem der vorangehenden Ansprüche, wobei die Rückwand (4) zumindest abschnittsweise senkrecht verläuft, wobei die Anbindungseinrichtung (9) im zumindest abschnittsweise senkrecht verlaufenden Rückwandabschnitt angeordnet ist.

6. Becher (1) nach Anspruch 5, wobei die Anbindungseinrichtung (9) zumindest eine Reihe horizontal beabstandeter Bohrungen umfasst.

7. Becher (1) nach einem der vorangehenden Ansprüche, welcher ferner die vordere Becherwand (5) und die Rückwand (4) verbindende Seitenwände (12) umfasst, wobei die Seitenwände jeweils eine die Einfüll- und Auswurföffnung (2) begrenzende Seitenwandoberkante (17) aufweisen.

8. Becher (1) nach Anspruch 6, wobei die Rückwand ferner einen gegenüber dem zumindest abschnittsweise senkrecht verlaufenden Rückwandabschnitt geneigten Abschnitt (13) aufweist, welcher an seinem oberen Ende eine die Einfüll- und Auswurföffnung (2) begrenzende Oberkante (14) aufweist.

9. Becher (1) nach Anspruch 8, wobei der Neigungswinkel (γ) des geneigten Abschnitts (13) gegenüber dem zumindest abschnittsweise senkrecht verlaufenden Rückwandabschnitt größer als 15°, bevorzugt größer als 18°, besonders bevorzugt größer als 20° ist.

10. Becher (1) nach einem der Ansprüche 7 bis 9, wobei zumindest eine der Seitenwandoberkanten (17) zumindest abschnittsweise einen Neigungswinkel (β) zwischen 7° bis 11°, bevorzugt zwischen 8° und 10°, besonders bevorzugt von 9° aufweist.

11. Becherwerk mit zumindest einem Becher nach einem der Ansprüche, welcher über eine Anbindungseinrichtung (9) an einer Fördervorrichtung (7) des Becherwerks fixiert ist, wobei die Einfüll- und Auswurföffnung (2) in die Bewegungsrichtung (18) der Fördervorrichtung (7) ausgerichtet ist.

12. Becherwerk nach Anspruch 11, wobei die Fördervorrichtung (7) einen Gurt (16) aufweist.

13. Becherwerk nach Anspruch 11 oder 12, wobei die Fördervorrichtung (7) eine Steigung aufweist und insbesondere senkrecht ausgerichtet ist, wobei das Becherwerk ferner zwei Umlenkeinrichtungen (15) aufweist, um welche die Fördervorrichtung (7) umgelenkt ist.
